# EUROPÄISCHE PATENTSCHRIFT

(11) **EP 2 826 949 B1**
(45) Veröffentlichungstag und Bekanntmachung des Hinweises auf die Patenterteilung: **09.08.2017**
(21) Anmeldenummer: 14001977.9
(22) Anmeldetag: 06.06.2014
(51) Int. Cl.: E21B 19/10, F16B 2/14

(54) **Vorrichtung zum Halten von Rohren, Stangen und dergleichen**
Device for holding pipes, rods and the like
Dispositif de retenue de tuyaux, tiges et similaires

(30) Priorität: 18.07.2013 DE 102013012119; 03.04.2014 DE 102014005234
(43) Veröffentlichungstag der Anmeldung: 21.01.2015
(73) Patentinhaber: Forum B + V Oil Tools GmbH, 20457 Hamburg (DE)
(72) Erfinder: Vierke, André, 20257 Hamburg (DE); Stoldt, Frederik, 20257 Hamburg (DE)
(74) Vertreter: Marschall, Stefan

(56) Entgegenhaltungen:
- WO-A1-2007/126319
- US-A- 2 491 711

## Beschreibung

Die Erfindung betrifft eine Vorrichtung zum Halten von Rohren, Stangen und dergleichen nach dem Oberbegriff des Patentanspruchs 1.

Derartige Vorrichtungen sind bekannt aus US2491711 und WO2007126319, und werden verwendet um insbesondere im Bereich der Offshore-Bohrtechnik Rohre von Ölbohrplattformen zu halten. Die Rohre werden hierbei aus einzelnen Segmenten zusammengesetzt, die miteinander verschraubt werden. Jeweils nach dem Aufschrauben eines Verlängerungsteiles erfolgt ein Absenken des Rohrstranges.

Die Vorrichtung fixiert den Rohrstrang typischerweise während des Anschraubens eines Verlängerungsteiles und gibt den Rohrstrang dann frei, um ein Absenken zu ermöglichen. Beispielhafter Stand der Technik ist in der deutschen Patentanmeldung DE 10 2012 005 794 A1 der Anmelderin gezeigt.

Aufgabe der vorliegenden Erfindung ist es, eine alternative Vorrichtung mit der einleitend genannten Art zu schaffen.

Diese Aufgabe wird gelöst durch eine Vorrichtung mit den Merkmalen des Patentanspruchs 1.

Eine erfindungsgemäße Vorrichtung zum Halten von Rohren, Stangen und dergleichen hat einen Grundkörper, der in einen Stützkörper einsetzbar ist und eine sich in Absenkrichtung der Rohre um einen Konuswinkel verjüngende Innenumfangswandung hat. Zudem hat die Vorrichtung eine Vielzahl von keilförmigen Klemmelementen, die jeweils eine um den Konuswinkel angestellte rückseitige Schrägfläche und eine vordere Klemmfläche zum abschnittsweisen Umgreifen der Rohre aufweisen. Erfindungsgemäß haben die Klemmelemente rückseitig jeweils zumindest ein Halteelement, an dem jeweils zumindest ein um den Konuswinkel angestelltes verfahrbares Hubelement angreift, das in einem Aufnahmeschacht des Grundkörpers angeordnet ist.

Durch die rückseitigen Halteelemente erfolgt eine hochpräzise und hochbelastbare Führung der Klemmelemente. Dadurch, dass die Hubelemente in Richtung des Konuswinkels angestellt sind, bringen sie eine optimale Hub- bzw. Haltekraft auf. Ein Verwinden der Hubelemente wird verhindert bzw. zumindest stark reduziert. Somit können die Hubelemente entsprechend leistungs- und/oder gewichtsreduziert ausgeführt werden.

Bei einem Ausführungsbeispiel ist in den Aufnahmeschächten jeweils eine Zylinderkolbenanordnung angeordnet, in deren Zylinder ein Kolben geführt ist, der zusammen mit seiner Kolbenstange das jeweilige Hubelement bildet. Die Zylinderkolbenanordnungen erlauben die Übertragung von großen Kräften und sind äußerst robust. Bevorzugterweise sind die Zylinderkolbenanordnungen hydraulisch betrieben. Sie können jedoch auch pneumatisch betrieben werden.

Bei einem Ausführungsbeispiel sind die Halteelemente rohrartige Körper, in deren Innenräumen die Kolbenstangen mit ihren aus dem jeweiligen Zylinder herausragenden Stangenabschnitt verlaufen und die auf den Zylindern verschiebbar sind. Hierdurch wirken die Halteelemente als eine Art Schutzgehäuse für die Kolbenstangen. Dadurch, dass die Halteelemente zudem verschiebbar auf den Zylindern sind, können die Zylinder als Führungen für die Halteelemente dienen, wodurch die Kolbenstangen stabilisiert werden, insbesondere dann, wenn sie weit, beispielsweise über 50%, ausgefahren sind. Die Halteelemente können so innenumfangsseitig geführt werden.

Zur außenumfangsseitigen Führung der Halteelemente können sie abschnittsweise in die Aufnahmeschächte eintauchen und über Verbindungstege an den Klemmelementen angebunden sein, wobei die Aufnahmeschächte jeweils einen Längsschlitz zum Durchführen der Verbindungsstege haben. Die Verbindungsstege können als ein Einzelsteg, als eine Vielzahl von Stegen, fachwerkartig und dergleichen ausgebildet sein.

Bei einem alternativen Ausführungsbeispiel sind die Halteelemente armartig und jeweils ein Halteelement ist mit einem freien Ende eines aus dem jeweiligen Zylinder herausragenden Stangenabschnitt der Kolbenstangen verbunden. Bei diesem Ausführungsbeispiel entfallen Verbindungsstege und dergleichen zum Herstellen einer Verbindung zwischen den Klemmelementen und dem jeweiligen Halteelement.

Zum Schutz der Verbindungspunkte zwischen den freien Enden und den armartigen Halteelementen können becherartige Körper über den freien Enden der Kolbenstangen angeordnet sein.

Das alternative Ausführungsbeispiel lässt sich besonders kompakt ausführen, wenn die Halteelemente im eingefahren Zustand in stirnseitigen Versenkungen des Grundkörpers aufgenommen sind.

Um den aus dem jeweiligen Zylinder herausragenden Stangenabschnitt der Kolbenstangen vor Verschmutzungen zu schützen, können diese von jeweils einem rohrartigen Gehäuse umgeben sein, das mit der Kolbenstange im Bereich von deren freien Ende verbunden ist und auf dem jeweiligen Zylinder verschiebbar ist. Gleichzeitig werden die Kolbenstangen durch das rohrartige Gehäuse stabilisiert, insbesondere dann, wenn sie weit, beispielsweise über 50%, ausgefahren sind.

Bei einem bevorzugten Ausführungsbeispiel sind vier Klemmelemente vorgesehen. Hierdurch erfolgt eine jeweils diametrale bzw. gegenüberliegende Einspannung der Rohre.

Die Klemmelemente können seitliche Plattenelemente zum gegenseitigen Bilden von Überlappungen haben. Die Plattenelemente greifen beim Einfahren eine zahnartig ineinander, wodurch sich die Klemmelemente gegenseitig mitnehmen und ein gleichzeitiges Ein- und Ausfahren der Klemmelemente unterstützt wird.

Als vorteilhaft hat sich ein Konuswinkel von 10° bis 12° zur Axialrichtung des Grundkörpers herausgestellt.

Um ein Verdrehen der Vorrichtung beim Handhaben der Rohre zu verhindern, kann der Grundkörper zumindest ein rückseitiges Drehsicherungselement zum formschlüssigen Zusammenwirken mit korrespondieren drehfesten Aufnahmen des Stützkörpers haben.

Im Folgenden wird ein bevorzugtes Ausführungsbeispiel der Erfindung anhand von schematischen Darstellungen näher erläutert. Es zeigen:
- Figur 1: eine perspektivische Draufsicht auf ein in einen Stützkörper eingesetztes erstes Ausführungsbeispiel einer erfindungsgemäßen Vorrichtung in Schließstellung,
- Figur 2: eine Einbaulage des Stützkörpers mit der Vorrichtung gemäß dem ersten Ausführungsbeispiel in Schließstellung,
- Figur 3: eine perspektivische Draufsicht auf die in den Stützkörper eingesetzte Vorrichtung gemäß dem ersten Ausführungsbeispiel in Öffnungsstellung,
- Figur 4: eine Einbaulage des Stützkörper mit der Vorrichtung gemäß dem ersten Ausführungsbeispiel in Öffnungsstellung,
- Figur 5: eine Explosionsdarstellung der Vorrichtung gemäß dem ersten Ausführungsbeispiel,
- Figur 6: eine Draufsicht auf eine die in den Stützkörper eingesetzte Vorrichtung gemäß dem ersten Ausführungsbeispiel in Öffnungsstellung,
- Figur 7: ein Axialschnitt durch die Vorrichtung gemäß dem ersten Ausführungsbeispiel in Öffnungsstellung,
- Figur 8: ein Axialschnitt durch die Vorrichtung in Schließstellung,
- Figur 9: eine perspektivische Draufsicht auf ein in einen Stützkörper eingesetztes zweites Ausführungsbeispiel der erfindungsgemäßen Vorrichtung in Schließstellung,
- Figur 10: eine Einbaulage des Stützkörpers mit der Vorrichtung gemäß dem zweiten Ausführungsbeispiel in Schließstellung,
- Figur 11: eine perspektivische Draufsicht auf die in den Stützkörper eingesetzte Vorrichtung gemäß dem zweiten Ausführungsbeispiel in Öffnungsstellung,
- Figur 12: eine Einbaulage des Stützkörper mit der Vorrichtung gemäß dem zweiten Ausführungsbeispiel in Öffnungsstellung,
- Figur 13: eine Explosionsdarstellung der Vorrichtung gemäß dem zweiten Ausführungsbeispiel,
- Figur 14: eine Draufsicht auf eine die in den Stützkörper eingesetzte Vorrichtung gemäß dem zweiten Ausführungsbeispiel in Öffnungsstellung,
- Figur 15: ein Axialschnitt durch die Vorrichtung gemäß dem zweiten Ausführungsbeispiel in Öffnungsstellung,
- Figur 16: eine Draufsicht auf eine die in den Stützkörper eingesetzte Vorrichtung gemäß dem zweiten Ausführungsbeispiel in Schließstellung, und
- Figur 17: ein Axialschnitt durch die Vorrichtung gemäß dem zweiten Ausführungsbeispiel in Schließstellung.

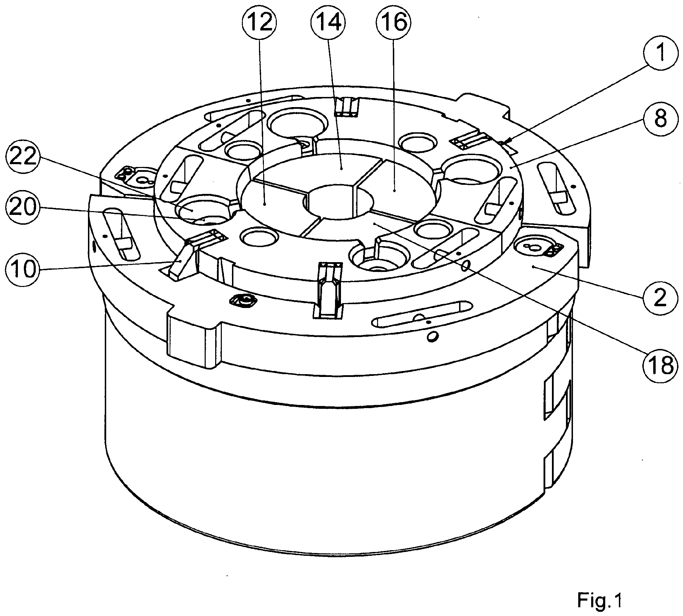

In den Figuren 1 bis 4 ist ein erstes Ausführungsbeispiel einer erfindungsgemäßen Vorrichtung 1 zum Halten von Rohren, Stangen und dergleichen, insbesondere im Bereich der Offshore-Bohrtechnik von Ölbohrplattformen, in Einbaulage gezeigt. Die Vorrichtung 1 ist in einen ringförmigen und hier mehrteiligen Stützkörper 2 eingesetzt, der in eine Öffnung eines Drehtisches 4 eingehängt ist und sich mit einem Kragen 6 auf dem Drehtisch 4 abstützt.

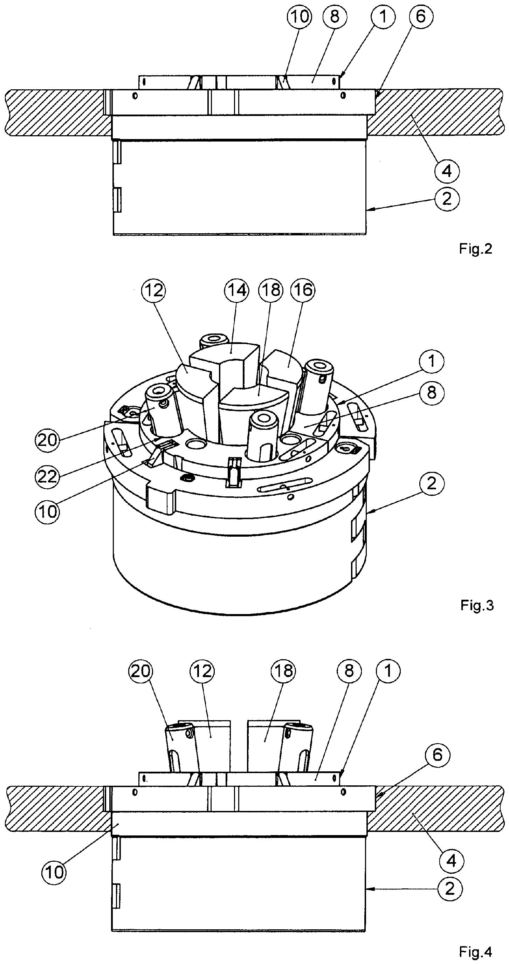

Die Vorrichtung 1 hat einen mehrteiligen Grundkörper 8, der mittels einer Vielzahl von Drehsicherungselementen 10 drehsicher in dem Stützkörper 2 aufgenommen ist. Zudem hat die Vorrichtung 1 in dem gezeigten Ausführungsbeispiel vier keilförmige Klemmelemente 12, 14, 16, 18, die in dem Grundkörper 8 angeordnet sind und aus einer Schließstellung zum Halten der Rohre (Figuren 1 und 2) in eine Öffnungsstellung zum Einspannen der Rohre (Figuren 3 und 4) relativ zum Grundkörper 8 in Hochrichtung bzw. Absenkrichtung der Rohre verschiebbar sind. Jedes Klemmelement 12, 14, 16, 18 weist zur Führung ein rückseitiges Halteelement 20 auf, das in jeweils einem Aufnahmeschacht 22 des Grundkörpers 8 geführt ist. Aus Gründen der Übersichtlichkeit sind in den Figuren lediglich ein Drehsicherungselement 10, ein Halteelement 20 und ein Aufnahmeschacht 22 mit einem Bezugszeichen versehen.

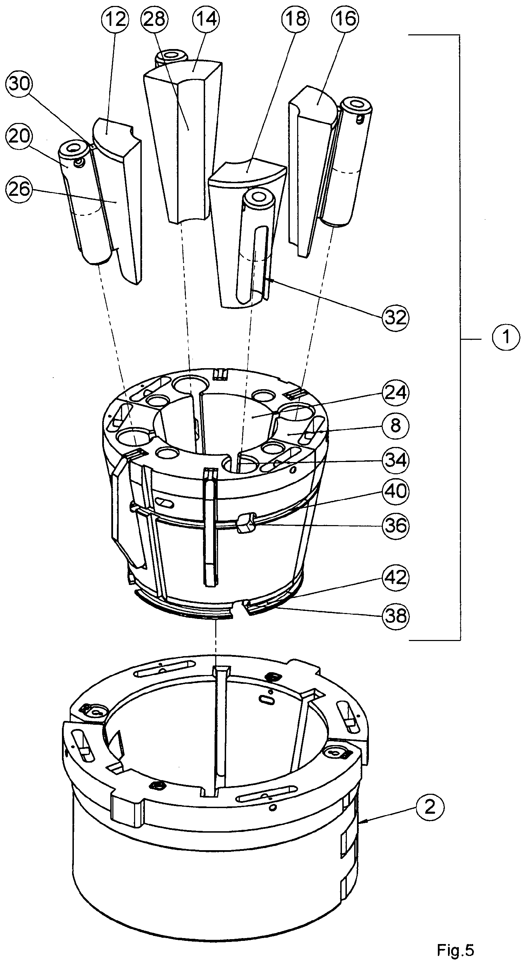

Gemäß Figur 5 hat der Grundkörper 8 eine ringartige Gestalt mit einer sich in Absenkrichtung der Rohre um einen Konuswinkel konisch verjüngenden Innenumfangswandung 24. Beispielsweise beträgt der Konuswinkel zwischen 10° und 12°. Die Klemmelemente 12, 14, 16, 18 haben jeweils eine rückseitige Schrägfläche 26, deren Anstellwinkel gleich einem Konuswinkel ist und eine vordere gebogene Klemmfläche 28 zum abschnittsweisen Umgreifen der Rohre.
Die Halteelemente 20 sind über jeweils einen Verbindungssteg 30 rückseitig an den Klemmelementen 12, 14, 16, 18 befestigt. Sie sind hier rohrartige Körper mit einem Boden bzw. in Einbaulage einem Deckel und entsprechend dem Anstellwinkel der Schrägflächen bzw. dem Konuswinkel zur Axialrichtung angestellt. An ihrer von den Klemmelementen 12, 14, 16, 18 abgewandten Seite sind sie mit einer sich nahezu über ihre gesamte Länge erstreckenden Längsöffnung 32 versehen.

Die Verbindungsstege 30 haben hier jeweils eine dem Halteelement 20 entsprechende Länge, können jedoch auch kürzer und beispielsweise auch in Form eines Verbindungsfachwerks ausgebildet sein. Sie sind jeweils durch vordere Längsschlitze 34 der Aufnahmeschächte 22 geführt und haben hierzu eine entsprechende Breite.

Die Aufnahmeschächte 22 haben jeweils einen mit den Halteelementen 20 korrespondierenden runden Querschnitt und sind entsprechend um den Konuswinkel zur Axialrichtung bzw. Hochrichtung angestellt. Sie haben jeweils einen der vorderen Längsschlitze 34, eine gemäß der Einbaulage obere Hydrauliköffnung 36 und eine untere Hydrauliköffnung 38. Die Längsschlitze 34 durchsetzen die Innenumwandung 24 des Grundkörpers 8 in einem den Klemmelementen 12, 14, 16, 18 zugewandten bzw. vorderen Umfangsbereich und nehmen jeweils einen der Verbindungsstege 30 der Halteelemente 20 auf. Mittels der unteren und oberen Hydrauliköffnungen 36, 38 sind die Aufnahmeschächte 22 rückseitig mit einer nicht gezeigten Hydraulikversorgung verbindbar. Die Hydrauliköffnungen 36, 38 münden bzw. erstrecken sich von Außenumfangskanälen 40, 42, die in den Grundkörper 8 eingebracht sind und im eingesetzten Zustand von dem Stützkörper 2 radial abgedichtet werden.

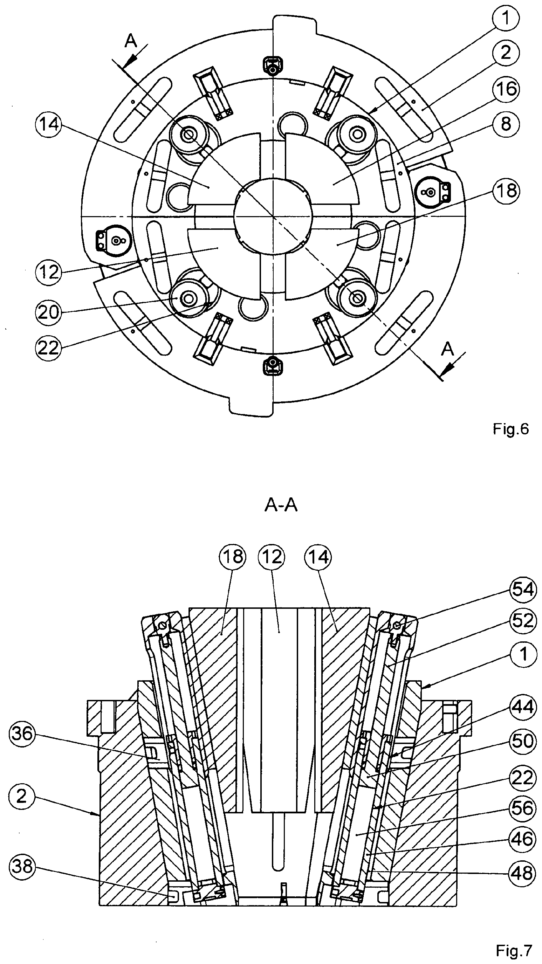

Wie in dem Schnitt in Figur 7 gezeigt, ist in den Aufnahmeschächten 22 jeweils eine Zylinderkolbenanordnung 44 zum Ausfahren der Klemmelemente 12, 14, 16, 18 angeordnet. Die Zylinderkolbenanordnungen 44 haben jeweils einen Zylinder 46, der an seinem unteren Ende mit dem Aufnahmeschacht 22 verbunden ist und über einen Radialspalt 48 bzw. Ringspalt von einer Innenwandung des jeweiligen Aufnahmeschachts 22 beabstandet ist. In dem Zylinder 46 ist ein verschiebbarer Kolben 50 mit seiner Kolbenstange 52 geführt, die zusammen ein mit an dem Halteelement 20 angreifendes Hubelement bilden. Die Verbindung zwischen dem Halteelement 20 und einem freien Ende der Kolbenstange 52 des Hubelementes erfolgt hier über einen in die Kolbenstangen 52 eingesetzten Augeneinsatz 54, durch dessen Auge ein Querbolzen und dergleichen geführt ist, der endseitig in Querbohrungen des Halteelements 20 gelagert ist (nicht beziffert). Die Kolbenstangen 52 verlaufen somit mit ihren aus dem jeweiligen Zylinder 46 herausragenden Stangenabschnitt im jeweiligen Innenraum der Halteelemente 20. Die Halteelemente 20 sind dabei auf den Zylindern 46 verschiebbar geführt und tauchen mit ihrer Wandung in den Radialspalt 48 ein. Der Kolben 50 begrenzt einen in Einbaulage unteren Arbeitsraum 56 und wird bei Beaufschlagung des Arbeitsraums 56 mit einem Hydraulikfluid ausgefahren.

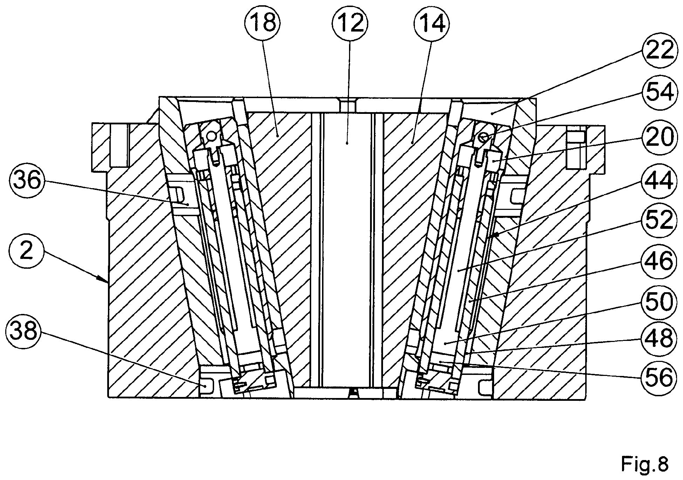

Zum Ausfahren bzw. Überführen der Vorrichtung 1 aus ihrer Schließstellung in ihre Öffnungsstellung werden die Arbeitsräume 56 druckbeaufschlagt, woraufhin die Klemmelemente 12, 14, 16, 18 ausfahren und dabei radial voneinander beabstandet werden. Nach dem Einsetzen eines zu haltenden Rohres, einer Stange und dergleichen werden die Zylinderkolbenanordnungen 44 und insbesondere die Arbeitsräume 56 druckentlastet, woraufhin sich die Klemmelemente 12, 14, 16, 18 zurück in ihre Schließstellung bewegen. Die Arbeitsräume werden wie in Figur 8 gezeigt minimiert und die Klemmelemente 12, 14, 16, 18 werden radial aufeinander zubewegt, bis sie das Rohr umgreifen bzw. dieses sicher zwischen den Klemmelementen 12, 14, 16, 18 gehalten ist. Eine Einfahrtiefe der Klemmelemente 12, 14, 16, 18 richtet sich dabei nach dem jeweiligen Rohraußendurchmesser. Bevorzugterweise ist die Einfahrtiefe immer gleich.

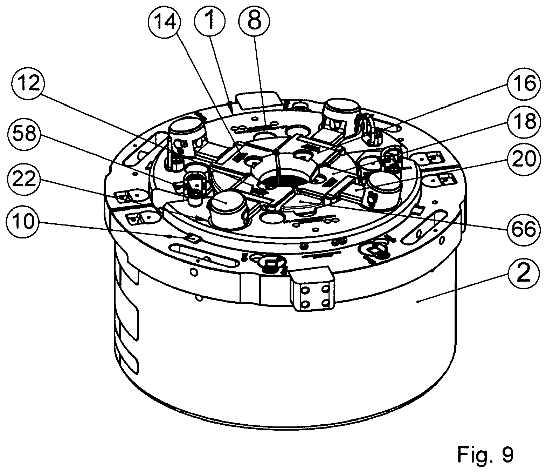

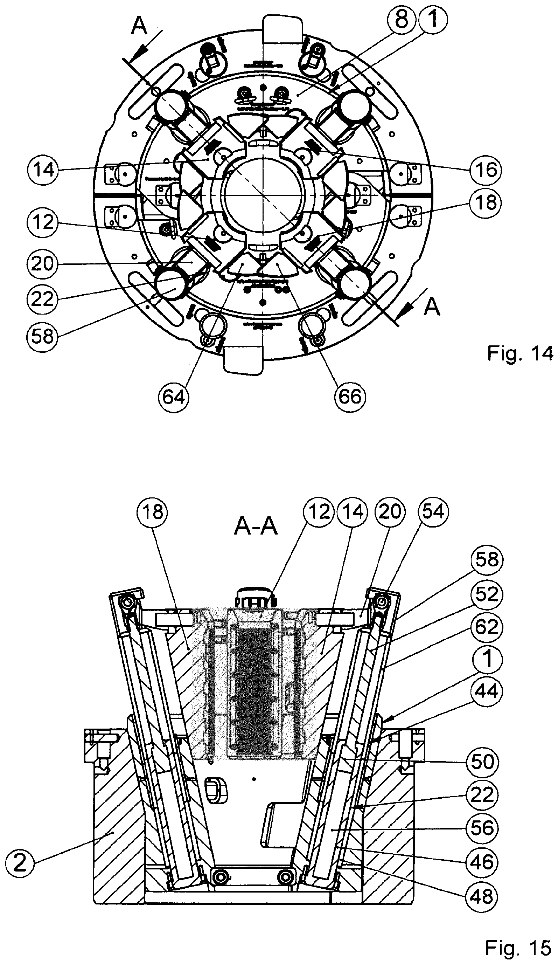

In den Figuren 9 bis 17 ist ein zweites Ausführungsbeispiel einer erfindungsgemäßen Vorrichtung 1 zum Halten von Rohren, Stangen und dergleichen, insbesondere im Bereich der Offshore-Bohrtechnik von Ölbohrplattformen, in Einbaulage gezeigt. Die Vorrichtung 1 gemäß dem zweiten Ausführungsbeispiel hat ebenfalls einen Grundkörper 8, der in einen Stützkörper 2 einsetzbar ist und eine sich in Absenkrichtung der Rohre um einen Konuswinkel verjüngende Innenumfangswandung 24 hat. Zudem hat die Vorrichtung 1 gemäß dem zweiten Ausführungsbeispiel ebenfalls eine Vielzahl von keilförmigen Klemmelementen 12, 14, 16, 18, die jeweils eine um den Konuswinkel angestellte rückseitige Schrägfläche 26 und eine vordere Klemmfläche 28 zum abschnittsweisen Umgreifen der Rohre haben. Erfindungsgemäß haben die Klemmelemente 12, 14, 16, 18 ebenfalls rückseitig jeweils zumindest ein Halteelement 20, an dem jeweils zumindest ein um den Konuswinkel angestelltes verfahrbares Hubelement angreift, das in einem Aufnahmeschacht 22 des Grundkörpers 8 angeordnet ist. Die Hubelemente werden ebenfalls von jeweils einem Kolben 50 mit seiner Kolbenstange 52 einer in den Aufnahmeschächten 22 eingesetzten Zylinderkolbenanordnung 44 gebildet (Figur 15).

Im Folgenden werden die wesentlichen Unterschiede zum ersten Ausführungsbeispiel nach den Figuren 1 bis 8 erläutert.

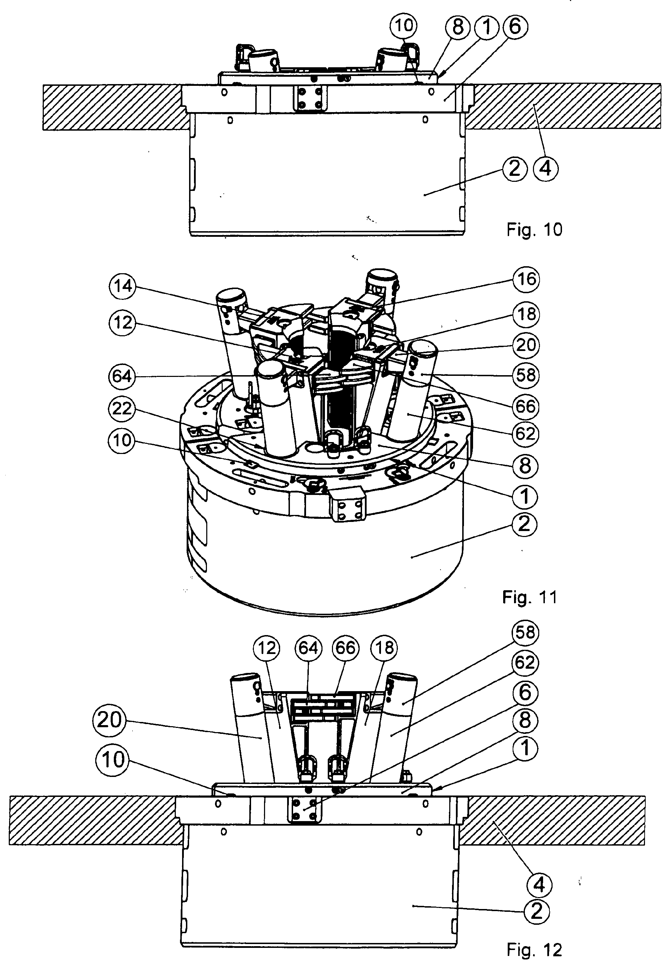

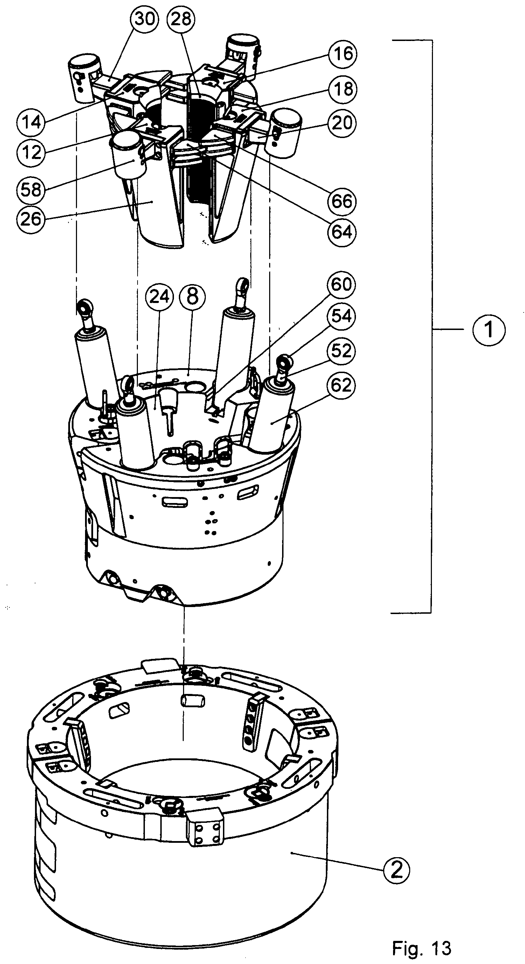

Im Unterschied zum ersten Ausführungsbeispiel sind die rückseitigen Halteelemente 20 der Klemmelementen 12, 14, 16, 18 keine rohrartigen Körper, sondern armartig ausgebildet (Figur 11). Sie sind mit einem freien Ende eines aus dem jeweiligen Zylinder 46 herausragenden Stangenabschnitts der Kolbenstangen 52, beispielsweise über einen Augeneinsatz 54, verbunden (Figur 13 und 15). Somit zeigt die Vorrichtung 1 nach dem zweiten Ausführungsbeispiel auch keine Verbindungsstege 30. Zum Schutz der freien Enden der Kolbenstangen 52 bzw. zum Schutz der jeweiligen Verbindungspunkte von den Halteelementen 20 mit den Kolbenstangen 52 sind über die freien Enden der Kolbenstangen 52 becherartige Körper 58 bzw. Schutzkappen angeordnet bzw. die freien Enden im Innenraum von Schutzkappen 58 angeordnet.

Die Halteelemente 20 erstrecken sich lediglich im oberen Bereich der Klemmelemente 12, 14, 16, 18, so dass die Aufnahmeschächte 22 radial innen öffnende Längsschlitze 34 entfallen. Stattdessen weist der Grundkörper 8 jeweils obere bzw. stirnseitige Versenkungen 60 auf, in die die Halteelemente 20 im eingefahrenen Zustand der Klemmelemente 12, 14, 16, 18 zumindest abschnittsweise aufgenommen sind (Figuren 13 und 9).

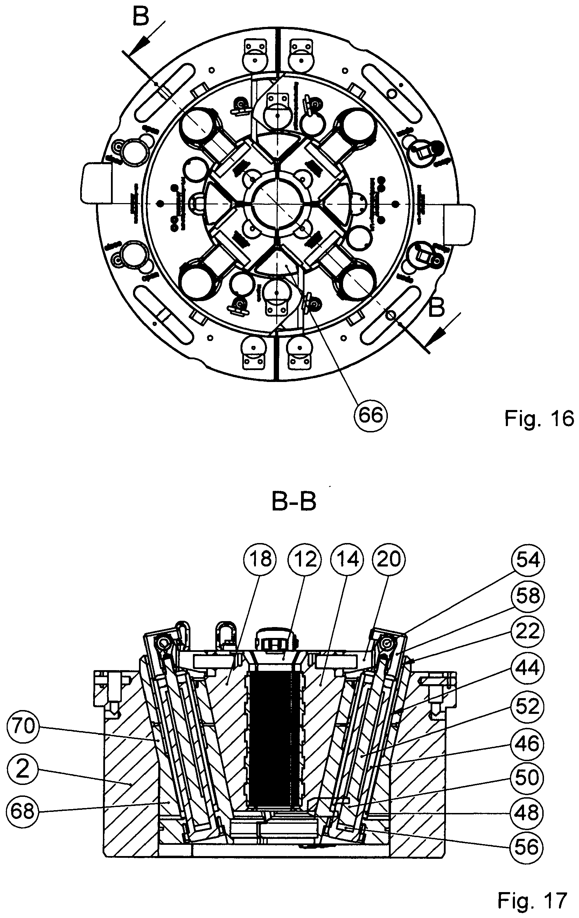

Zum Schutz der Kolbenstange 52 und/oder zur Stabilisierung derselben im weit ausgefahrenen Zustand weist die Vorrichtung 1 jeweils pro Zylinderkolbenanordnung 44 ein rohrartiges Gehäuse 62 auf (Figuren 11, 12, 13, 15 und 17). Dieses ist jeweils fest mit den Kolbenstangen 52 im Bereich von deren freien Enden verbunden. Es hat eine derartige Erstreckung, dass es einen aus dem jeweiligen Zylinder 46 herausragenden Stangenabschnitt der Kolbenstangen 52 umgibt und zudem auf dem jeweiligen Zylinder 46 verschiebbar ist (Figur 17). Dabei taucht es stets in eine Ringraum 48 zwischen dem jeweiligen Zylinder 46 und einer Innenwandung der Aufnahmeschächte 22 ein. Es schließt sich spaltfrei bzw. nahezu spaltfrei der jeweiligen Schutzkappe 58 an und hat vorzugsweise den gleichen Außendurchmesser wie die Schutzkappen 58.

Zudem haben die Klemmelemente 12, 14, 16, 18 des zweiten Ausführungsbeispiels im Unterschied zum ersten Ausführungsbeispiel beidseits angeordnete seitliche Plattenelemente 64, 66 zum gegenseitigen Bilden von in Einbaulage betrachtet horizontalen Überlappungen (Figuren 11, 12, 13 und 14). Die Plattenelemente 64, 66 sind hier jeweils paarweise angeordnet, so dass sowohl beim Ein- als auch beim Ausfahren eine gegenseitige Unterstützung bzw. Vergleichmäßigung erfolgen kann.

Zudem hat wie in Figur 17 gezeigt, der Grundkörper 8 im zweiten Ausführungsbeispiel einen gegenüber dem ersten Ausführungsbeispiel verlängerten zylindrischen unteren Abschnitt 68 und einen verkürzten konischen oberen Abschnitt 70 (siehe Figuren 7 und 17). Der Stützkörper 2 ist mit einer korrespondierenden Gegenkontur ausgebildet.

Die Funktionsweise des zweiten Ausführungsbeispiels ist entsprechend der Funktionsweise des ersten Ausführungsbeispiels. Zum Ausfahren bzw. Überführen der Vorrichtung 1 aus ihrer Schließstellung in ihre Öffnungsstellung werden die Hubelemente hydraulisch ausgefahren. Nach dem Einsetzen eines zu haltenden Rohres werden die Zylinderkolbenanordnungen 44 und insbesondere deren zum Ausfahren zuvor druckbeaufschlagten Arbeitsräume 56 druckentlastet, woraufhin sich die Klemmelemente 12, 14, 16, 18 zurück in ihre Schließstellung bewegen. Die Arbeitsräume 26 werden minimiert und dabei die Klemmelemente 12, 14, 16, 18 radial aufeinander zu bewegt, bis sie das Rohr umgreifen bzw. dieses sicher zwischen den Klemmelementen 12, 14, 16, 18 gehalten ist. Im Unterschied zum ersten Ausführungsbeispiel greifen beim Ausführungsbeispiel die seitlichen Plattenelemente 64, 66 ineinander und können so eine Vergleichmäßigung der Klemmelemente 12, 14, 14, 16 bzgl. deren Einfahr- bzw. Ausfahrbewegung bewirken.

Die in den Figuren 9 bis 17 verwendeten und in der Beschreibung zu den Figuren 9 bis 19 nicht genannten Bezugsziffern betrifft die gleichen funktionalen Elemente wie im ersten Ausführungsbeispiel, so dass wiederholende Erläuterungen entfallen und stattdessen auf die Beschreibung zu den Figuren 1 bis 8 und die Bezugszeichenliste verwiesen wird.

Auch wenn in der vorstehenden Figurenbeschreibung ein hydraulischer Betrieb der erfindungsgemäßen Vorrichtung 1 beschrieben ist, kann der Betrieb auch pneumatisch erfolgen. Der Betrieb der Vorrichtung 1 ist also nicht auf Hydraulik begrenzt. Die beispielsweise vorstehend als Hydraulikleitungen 36, 38 bezeichneten Leitungen sind dann entsprechende Pneumatikleitungen.

Offenbart ist eine Vorrichtung zum Halten von Rohren, Stangen und dergleichen mit einem Grundkörper, der in einen Stützkörper einsetzbar ist und eine sich in Absenkrichtung der Rohre um einen Konuswinkel bzw. Anstellwinkel verjüngende Innenumfangswandung hat, und mit einer Vielzahl von keilförmigen Klemmelementen, die jeweils eine um den Konuswinkel angestellte rückseitige Schrägfläche und eine vordere Klemmfläche zum abschnittsweisen Umgreifen der Rohre haben, wobei die Klemmelemente rückseitig jeweils zumindest ein Halteelement haben, an dem jeweils zumindest ein um den Konuswinkel angestelltes verfahrbares Hubelement angreift, das in einem Aufnahmeschacht des Grundkörpers angeordnet ist.

### Bezugszeichenliste

- 1: Vorrichtung
- 2: Stützkörper
- 4: Drehtisch
- 6: Kragen
- 8: Grundkörper
- 10: Drehsicherungselement
- 12: Klemmelement
- 14: Klemmelement
- 16: Klemmelement
- 18: Klemmelement
- 20: Halteelement
- 22: Aufnahmeschacht
- 24: Innenumfangswandung
- 26: Schrägfläche
- 28: Klemmfläche
- 30: Verbindungssteg
- 32: Längsöffnung
- 34: Längsschlitz
- 36: Hydraulikleitung
- 38: Hydraulikleitung
- 40: Außenumfangskanal
- 42: Außenumfangskanal
- 44: Zylinderkolbenanordnung
- 46: Zylinder
- 48: Radialspalt / Ringspalt
- 50: Kolben
- 52: Kolbenstange
- 54: Augeneinsatz
- 56: Arbeitsraum
- 58: becherartige Körper / Schutzkappen
- 60: Versenkung
- 62: rohrartiges Gehäuse
- 64: Plattenelement
- 66: Plattenelement
- 68: unterer Abschnitt
- 70: oberer Abschnitt

## Patentansprüche

1. Vorrichtung (1) zum Halten von Rohren, Stangen und dergleichen mit einem Grundkörper (8), der in einen Stützkörper (2) einsetzbar ist und eine sich in Absenkrichtung der Rohre um einen Konuswinkel verjüngende Innenumfangswandung (24) hat, und mit einer Vielzahl von keilförmigen Klemmelementen (12, 14, 16, 18), die jeweils eine um den Konuswinkel angestellte rückseitige Schrägfläche (26) und eine vordere Klemmfläche (28) zum abschnittsweisen Umgreifen der Rohre haben, wobei die Klemmelemente (12, 14, 16, 18) rückseitig jeweils zumindest ein Halteelement (20) haben, an dem jeweils zumindest ein um den Konuswinkel angestelltes verfahrbares Hubelement (50, 52) angreift, das in einem Aufnahmeschacht (22) des Grundkörpers (8) angeordnet ist, wobei in den Aufnahmeschächten (22) jeweils eine Zylinderkolbenanordnung (44) angeordnet ist, in deren Zylinder (46) ein Kolben (50) geführt ist, der zusammen mit seiner Kolbenstange (52) das jeweilige Hubelement bildet, **dadurch gekennzeichnet, dass** die Halteelemente (20) rohrartige Körper sind, in deren Innenräumen die Kolbenstangen (52) mit ihren aus dem jeweiligen Zylinder (46) herausragenden Stangenabschnitt verlaufen und die auf den Zylindern (46) verschiebbar sind.

2. Vorrichtung nach Anspruch 1, wobei die Halteelemente (20) abschnittsweise in die Aufnahmeschächte (22) eintauchen und über Verbindungsstege (30) an den Klemmelementen (12, 14, 16, 18) angebunden sind, die durch jeweils einen Längsschlitz (34) der Aufnahmeschächte (22) geführt sind.

3. Vorrichtung (1) zum Halten von Rohren, Stangen oder dergleichen, mit einem Grundkörper (8), der in einen Stützkörper (2) einsetzbar ist und eine sich in Absenkrichtung der Rohre um einen Konuswinkel verjüngende Innenumfangswandung (24) hat, und mit einer Vielzahl von keilförmigen Klemmelementen (12, 14, 16, 18), die jeweils eine um den Konuswinkel angestellte rückseitige Schrägfläche (26) und eine vordere Klemmfläche (28) zum abschnittsweisen Umgreifen der Rohre haben, **dadurch gekennzeichnet, dass** die Klemmelemente (12, 14, 16, 18) rückseitig jeweils zumindest ein Halteelement (20) haben, an dem jeweils zumindest ein um den Konuswinkel angestelltes verfahrbares Hubelement (50, 52) angreift, das in einem Aufnahmeschacht (22) des Grundkörpers (8) angeordnet ist,
wobei in den Aufnahmeschächten (22) jeweils eine Zylinderkolbenanordnung (44) angeordnet ist, in deren Zylinder (46) ein Kolben (50) geführt ist, der zusammen mit seiner Kolbenstange (52) das jeweilige Hubelement bildet,
wobei die Halteelemente (20) armartig sind und jeweils ein Halteelement (20) mit einem freien Ende eines aus dem jeweiligen Zylinder (46) herausragenden Stangenabschnitts der Kolbenstangen (52) verbunden ist,
und wobei der aus dem jeweiligen Zylinder (46) herausragende Stangenabschnitt der Kolbenstangen (52) von jeweils einem rohrartigen Gehäuse (62) umgeben ist, das mit der jeweiligen Kolbenstange (52) im Bereich von deren freiem Ende verbunden ist und auf dem jeweiligen Zylinder (46) verschiebbar ist.

4. Vorrichtung nach Anspruch 3, wobei über den freien Enden der Kolbenstangen (52) becherartige Körper (58) angeordnet sind.

5. Vorrichtung nach Anspruch 3 oder 4, wobei die Halteelemente (20) im eingefahren Zustand in stirnseitigen Versenkungen (60) des Grundkörpers (8) aufgenommen sind.

6. Vorrichtung nach einem der vorhergehenden Ansprüche, wobei der Grundkörper (8) vier Klemmelemente (12, 14, 16, 18) hat.

7. Vorrichtung nach einem der vorhergehenden Ansprüche, wobei die Klemmelemente (12, 14, 16, 18) seitliche Plattenelemente (64, 66) zum gegenseitigen Bilden von Überlappungen haben.

8. Vorrichtung nach einem der vorhergehenden Ansprüche, wobei der Konuswinkel 10° bis 12° beträgt.

9. Vorrichtung nach einem der vorhergehenden Ansprüche, wobei der Grundkörper (8) rückseitig zumindest ein Drehsicherungselement (10) zum formschlüssigen Zusammenwirken mit korrespondieren drehfesten Aufnahmen des Stützkörpers (2) hat.

## Claims

1. Device (1) for holding tubes, rods and the like, having a base body (8) which can be inserted in a supporting body (2) and has an inner circumferential wall (24) which narrows according to a cone angle in the direction in which the tubes are lowered, and having a plurality of wedge-shaped clamping elements (12, 14, 16, 18), each of which has a rear inclined face (26) angled with the cone angle and a front clamping face (28) for clasping sections of the tubes,
wherein at least one retaining element (20) is provided on the rear of each clamping element (12, 14, 16 , 18) and at least one lifting element (50, 52) inclined to be displaceable at the cone angle and arranged in an accommodation channel (22) in the base body (8) engages in each retaining element
wherein a cylinder-piston assembly (44) with a piston (50) guided inside the cylinder (46) thereof is arranged in each accommodation channel (22), which piston together with its piston rod (52) forms the respective lifting element,
**characterised in that**
the retaining elements (20) are tubular bodies, in the interior spaces of which the piston rods (52) extend together with the rod section protruding from the respective cylinder (46) and are displaceable along the cylinders (46).

2. Device according to claim 1, wherein in the retaining elements (20) extend partly into the accommodation channels (22) and are connected to the clamping elements (12, 14, 16, 18) via connecting tabs (30), which are guided in a respective longitudinal slot (34) in the accommodation channels (22).

3. Device (1) for holding tubes, rods and the like, having a base body (8) which can be inserted in a supporting body (2) and has an inner circumferential wall (24) which narrows according to a cone angle in the direction in which the tubes are lowered, and having a plurality of wedge-shaped clamping elements (12, 14, 16, 18), each of which has a rear inclined face (26) angled with the cone angle and a front clamping face (28) for clasping sections of the tubes,
**characterised in that** at least one retaining element (20) is provided on the rear of each clamping element (12, 14, 16 , 18) and at least one lifting element (50, 52) inclined to be displaceable at the cone angle and arranged in an accommodation channel (22) in the base body (8) engages in each retaining element,
wherein a cylinder-piston assembly (44) with a piston (50) guided inside the cylinder (46) thereof is arranged in each accommodation channel (22), which piston together with its piston rod (52) forms the respective lifting element,
wherein the retaining elements (20) are embodied as arms and each retaining element (20) is connected to a free end of a rod section of the piston rods (52) protruding from the respective cylinder (46),
and wherein each rod section of the piston rods (52) protruding from the respective cylinder (46) is surrounded by a tubular housing (62) which is connected to the respective piston rod (52) in the area of the free end thereof and is displaceable along the respective cylinder (46).

4. Device according to claim 3, wherein cup-like bodies (58) are arranged over the free ends of the piston rods (52).

5. Device according to claim 3 or 4, wherein the retaining elements (20) in the retracted state are seated in the recesses (60) conformed on the front faces of base body (8).

6. Device according to any one of the preceding claims, wherein the base body (8) has four clamping elements (12, 14, 16, 18).

7. Device according to any one of the preceding claims, wherein the clamping elements (12, 14, 16, 18) have lateral plate elements (64, 66) designed to form mutual overlaps.

8. Device according to any one of the preceding claims, wherein the cone angle is 10° to 12°.

9. Device according to any one of the preceding claims, wherein the rear side of the base body (8) has at least one rotational locking member (10) for positive locking cooperation with corresponding rotationally fixed receptacles in the support body (2).

## Revendications

1. Dispositif (1) destiné à maintenir des tubes, barres et produits analogues avec un corps de base (8), qui peut être inséré dans un corps de soutien (2) et possède une cloison périphérique intérieure (24) se réduisant autour d'un angle de cône dans le sens de la descente des tubes et avec une pluralité d'éléments de serrage en forme de coin (12, 14, 16, 18), qui possèdent respectivement une surface inclinée (26) arrière disposée autour d'un angle de cône et une surface de serrage avant (28) pour englober par section les tubes,
les éléments de serrage (12, 14, 16, 18) possédant à l'arrière respectivement au moins un élément de retenue (20), sur lequel vient en prise respectivement au moins un élément de levage (50, 52) déplaçable situé autour de l'angle de cône, qui est disposé dans une cavité de réception (22) du corps de base (8),
un système à piston de vérin (44) étant disposé respectivement dans les cavités de réception (22), dans les vérins (46) duquel est guidé un piston (50), qui forme avec sa tige de piston (52) l'élément de levage respectif,
**caractérisé en ce que**
les éléments de retenue (20) sont des corps tubulaires dans les espaces intérieurs desquels passent les tiges de piston (52) avec leur section de tige dépassant du vérin (46) respectif et qui peuvent être déplacés sur les vérins (46).

2. Dispositif selon la revendication 1, les éléments de retenue (20) plongeant par section dans les cavités de réception (22) et étant attachés par des moulures de liaison (30) aux éléments de serrage (12, 14, 16, 18), qui sont guidés respectivement par une fente longitudinale (34) des cavités de réception (22).

3. Dispositif (1) destiné à maintenir des tubes, barres et produits analogues avec un corps de base (8), qui peut être inséré dans un corps de soutien (2) et possède une cloison périphérique intérieure (24) se réduisant autour d'un angle de cône dans le sens de la descente des tubes et avec une pluralité d'éléments de serrage (12, 14, 16, 18) en forme de coin qui possèdent respectivement une surface inclinée (26) arrière disposée autour d'un angle de cône et une surface de serrage avant (28) pour englober par section les tubes,
**caractérisé en ce que** les éléments de retenue (12, 14, 16, 18) possèdent à l'arrière respectivement au moins un élément de retenue (20), sur lequel vient en prise respectivement au moins un élément de levage (50, 52) déplaçable situé autour de l'angle de cône, qui est disposé dans une cavité de réception (22) du corps de base (8),
un système à piston de vérin (44) étant disposé respectivement dans les cavités de réception (22), dans les vérins (46) duquel est guidé un piston (50), qui forme avec sa tige de piston (52) l'élément de levage respectif,
les éléments de retenue (20) étant du type à bras et un élément de retenue (20) étant respectivement relié à une extrémité libre d'une section de tige de la tige de piston (52) dépassant du vérin respectif (46),
et la section de tige de la tige de piston (52) dépassant du vérin respectif (46) étant entourée respectivement d'un boîtier (62) de type tubulaire, qui est relié à la tige de piston respective (52) dans la zone de l'extrémité libre de celle-ci et peut être déplacé sur le vérins (46)respectif.

4. Dispositif selon la revendication 3, des corps (58) en forme de godet étant disposés sur les extrémités libres des tiges de piston (52).

5. Dispositif selon la revendication 3 ou 4, les éléments de retenue (20) étant logés à l'état rentré dans les noyures (60) de face du corps de base (8).

6. Dispositif selon l'une quelconque des revendications précédentes, le corps de base (8) possédant quatre éléments de serrage (12, 14, 16, 18).

7. Dispositif selon l'une quelconque des revendications précédentes, les éléments de serrage (12, 14, 16, 18) possédant des éléments à plaque (64, 66) latéraux pour former réciproquement des chevauchements.

8. Dispositif selon l'une quelconque des revendications précédentes, l'angle de cône étant de 10° à 12°.

9. Dispositif selon l'une quelconque des revendications précédentes, le corps de base (8) possédant en arrière au moins un élément anti-rotation (10) pour coopération par conformité de forme avec les logements solidaires en rotation correspondants du corps de soutien (2).
